# EUROPÄISCHE PATENTSCHRIFT

(11) **EP 3 673 314 B1**
(45) Veröffentlichungstag und Bekanntmachung des Hinweises auf die Patenterteilung: **09.02.2022**
(21) Anmeldenummer: 18755164.3
(22) Anmeldetag: 06.08.2018
(51) Int. Cl.: G02B 21/33, G02B 21/34, B05D 5/04, G02B 27/00

(54) **IMMERSIONSMIKROSKOPIE**
IMMERSION MICROSCOPY
MICROSCOPIE À IMMERSION

(30) Priorität: 21.08.2017 DE 102017119093
(43) Veröffentlichungstag der Anmeldung: 01.07.2020
(73) Patentinhaber: Carl Zeiss Microscopy GmbH, 07745 Jena (DE)
(72) Erfinder: OHRT, Thomas, 07751 Golmsdorf (DE); GÖGLER, Michael, 82515 Wolfratshausen (DE); KUES, Thorsten, 37120 Bovenden-Eddigehausen (DE)
(74) Vertreter: Patentanwälte Geyer, Fehners & Partner mbB
(86) Internationale Anmeldenummer: PCT/EP2018/071274
(87) Internationale Veröffentlichungsnummer: WO 2019/038071

(56) Entgegenhaltungen:
- WO-A1-2017/099459
- JP-B2- 4 603 295
- ALAN H. TKACZYK ET AL: "LUIDIC SWITCHINGOF HIGH-SPEED AIR-LIQUID TWO-PHASE FLOWSUSING ELECTROWETTING-ON-DIELECTRIC", PROCEEDINGS OF MICROTAS 2003 SEVENTH INTERNATIONAL CONFERENCE ON MICRO TOTAL ANALYSIS SYSTEMS, MICROTAS 2003, SAN DIEGO, CA, USA, 5. Oktober 2003 (2003-10-05), XP040567811, ISBN: 978-0-9743611-0-9
- Yoshiyuki G Surfaces ET AL: "Dynamic Contact Angle Measurement of Temperature-Responsive Surface Properties for Poly(-ZV-isopropylacrylamide) Grafted", Macromolecules, 1. Januar 1994 (1994-01-01), Seiten 6163-6166, XP055523823, Gefunden im Internet: URL:https://pubs.acs.org/doi/pdf/10.1021/m a00099a035 [gefunden am 2018-11-13]
- LAHANN J ET AL: "A reversible Switching Surface", SCIENCE, US AMERICAN ASSOCIATION FOR THE ADVANCEMENT OF SCIENCE, WASHINGTON, DC, Bd. 299, 17. Januar 2003 (2003-01-17), Seiten 371-374, XP002490005, DOI: 10.1126/SCIENCE.1078933 in der Anmeldung erwähnt

## Beschreibung

Die Erfindung bezieht sich auf ein Mikroskopobjektiv zur Abbildung einer Probe mit einem Mikroskop, wobei das Mikroskopobjektiv eine von einer Einfassung umgebene Frontlinse aufweist und zur Mikroskopie mit einer Immersionsflüssigkeit ausgebildet ist. Die Erfindung bezieht sich weiter auf einen Probenträger oder ein Deckglas zur Immersionsmikroskopie einer auf dem Probenträger oder unter dem Deckglas anzuordnenden Probe. Die Erfindung bezieht sich ebenfalls auf ein Verfahren zum Mikroskopieren einer Probe mit einem Immersionsmikroskop in einem Mikroskopieprozess, wobei ein Mikroskopobjektiv verwendet wird, das eine von einer Einfassung umgebene Frontlinse aufweist. Die Erfindung bezieht sich schließlich auch auf ein Immersionsmikroskop mit einem Mikroskopobjektiv der genannten Art.

Im Stand der Technik sind verschiedene Ansätze bekannt, um ein möglichst vollständiges Benetzen einer Frontlinse eines Mikroskopobjektivs mit einem Immersionsmedium zu sichern. Die EP 1717628 A1 und EP 2256535 A1 offenbaren einen Mechanismus für inverse Mikroskopobjektive, also Mikroskopobjektive, die eine Probe von unten mikroskopieren. Am frontseitigen Rand der Objektivhülle ist ein Mechanismus vorgesehen, welcher verhindert, dass ein auf die Frontlinse aufgesetzter Tropfen an Immersionsflüssigkeit über den frontseitigen Rand der Objektivhülle abläuft. Zudem sind Abflussschläuche vorgesehen, die Immersionsflüssigkeit gezielt nach unten ableiten. Eine innere Zone des Randes ist abstoßend für die Immersionsflüssigkeit ausgestaltet, für die das Mikroskop ausgelegt ist. Eine umgebende äußere Zone ist genau gegensätzlich ausgestaltet, so dass sie Immersionsflüssigkeit, die auf sie gelangt ist, nach außen ableitet. Die JP 4603295 diskutiert unter Bezugnahme auf weitere Veröffentlichungen verschiedene Konzepte, die ein Verschmutzen des Objektivinneren mit Immersionsflüssigkeit vermeiden. Zwei der darin geschilderten Lösungen entsprechen denen der genannten EP-Schriften. Eine dritte Lösung, die in der japanischen Veröffentlichung geschildert wird, sieht eine Nut am Objektiv vor, die verhindert, dass überschüssige Immersionsflüssigkeit in das Objektiv läuft. Weiter schlägt die JP 4603295 für ein ölimmersionsbasiertes Mikroskop eine lipophile Beschichtung auf der Linsenoberfläche umgeben von einer lipophoben Beschichtung am Rand der Linsenoberfläche vor. Der Stand der Technik befasst sich also in verschiedenen Ansätzen damit, eine Verschmutzung eines Objektivs mit Immersionsflüssigkeit zu vermeiden bzw. überschüssige Immersionsflüssigkeit gezielt abzuleiten. Eine weitere Einsatzmöglichkeit von zwischen flüssigkeitsabstoßend und flüssigkeitsanziehend umschaltbaren Flächen findet sich in "Fluidic switching of high-speed air-liquid two-phase flows using electrowetting-on-dielectric" (Alan H. Tkaczyk et al. in: Proceedings of microTAS 2003 - Seventh International Conference on Micro Total Analysis Systems).

Bei der Anwendung von Immersionsmedien stellen sich besonders bei der scannenden Mikroskopie Schwierigkeiten ein. Die Verfahrgeschwindigkeit, mit der das Objektiv über die Probe verschoben werden kann, ist dadurch begrenzt, dass bei zu hohen Bewegungsgeschwindigkeiten Scherkräfte auftreten, welche zum Abreißen des Immersionsfilms oder zum unzulässigen Verformen eines elastomeren Immersionsmediums führen können. Bei einem elastomeren Immersionsmedium kann auch mitunter eine zu hohe Scherkraft das Deckglas verschieben und so zu einer Zerstörung der Probe führen. Auch ein nicht vollständig fixierter Probenhalter kann auf diese Weise deplatziert werden, was ein erneutes Anfahren definierter Koordinaten in der Probe unmöglich machen würde. Diesen Problemen kann nur dadurch entgegengewirkt werden, dass zu Beginn des Mikroskopieprozesses ein Übermaß an Immersionsmedium eingesetzt wird, um es auszugleichen, dass durch die Verfahrgeschwindigkeit und die daraus resultierenden Scherkräfte Immersionsmedium verlorengeht oder sich so verformt, dass Teile des Strahlengangs ohne Immersionsmedium sind. Dadurch verschmutzt aber die Probe durch das Immersionsmedium und der Immersionsmediumverbrauch ist mitunter recht hoch, was kostenträchtig ist.

Insbesondere bei Mikroskopobjektiven, die mit verschiedenen Immersionsflüssigkeiten verwendet werden können, ist es für einen Benutzer mühsam, die Immersionsflüssigkeiten zu entfernen. Die Verschmutzung des Objektivs mit Immersionsflüssigkeit ist ein Problem. Ein verschmutztes Immersionsobjektiv, an dem noch Reste einer für den aktuellen Mikroskopieprozess nicht passenden Immersionsflüssigkeit anhaftet, führt zu einer schlechten Abbildungsgüte.

Der Erfindung liegt deshalb die Aufgabe zugrunde, eine gleichbleibend hohe Abbildungsgüte in der Mikroskopie sicherzustellen.

Die Erfindung ist in den unabhängigen Ansprüchen definiert. Die abhängigen Ansprüche definieren bevorzugte Ausgestaltungen.

Das Mikroskopobjektiv zur Abbildung einer Probe mit einem Immersionsmikroskop hat eine Frontlinse. Diese ist von einer Einfassung umgeben. Es ist zur Mikroskopie mit einer Immersionsflüssigkeit ausgebildet. Die Frontseite, z.B. die Frontlinse und/oder deren Einfassung, ist schaltbar zwischen einem die Immersionsflüssigkeit abstoßenden und einem die Immersionsflüssigkeit nicht abstoßenden oder sogar anziehenden Zustand. Alternativ oder zusätzlich ist der Probenträger oder das Deckglas derart ausgestaltet. Dies kann jeweils durch eine Behandlung der Oberfläche erreichbar sein, welche die gewünschten, schaltbaren abstoßenden Eigenschaften verleiht. Bei der Behandlung kann es sich um eine Beschichtung handeln. Gleichermaßen ist es möglich, in die Oberfläche eine Struktur einzubringen, welche die Eigenschaften erzeugt, oder die Oberfläche anderweitig, beispielsweise chemisch, zu behandeln, um die Eigenschaften zu erhalten. Soweit nachfolgend Beschichtungen erwähnt werden ist das rein beispielshalber.

Beschichtungen sind beispielsweise aus J. Lahann, et al., "A Reversibly Switching Surface", Science, Vol. 299, S. 371 bis 374, oder N. Nakayama, et al., "Light-Sensitive Fluorpolymer Coated Surface for Control of Cell Adhesion Behaviour", Front. Bioeng. Biotechnol. Conference Abstract: 10th World Biomaterials Congress. doi: 10.3389/conf.FBIOE.2016.01.01728, oder R. Rosario, et al., "Lotus Effect Amplifies Light-Induced Contact Angle Switching", J. Phys. Chem. B. Letters 2004, 108 (34), S. 12640 - 12642, bekannt.

Das Mikroskopobjektiv kann elektrisch oder durch die Einstrahlung von Beleuchtung bestimmter Art zwischen einem eine Flüssigkeit abstoßenden Zustand und einem die Flüssigkeit nicht abstoßenden oder mitunter sogar anziehenden Zustand umgeschaltet werden. Diese Umschaltbarkeit ermöglicht es einfach, das Mikroskopobjektiv zu reinigen, indem die Behandlung in den Zustand, welcher die Immersionsflüssigkeit abstößt, geschaltet wird. Die Immersionsflüssigkeit läuft dann am Mikroskopobjektiv ab.

Es ist zu bevorzugen, hierfür am Objektiv einen Ablaufkanal für abgestoßene Immersionsflüssigkeit bereitzustellen, indem auf der Einfassung und einer Objektivhülle eine eine immersionsabstoßende Umrandung, z.B. Schicht, vorgesehen ist, welche die Frontlinse umgibt. Sie lässt auf der Objektiveinfassung und der Objektivhülle ein Feld frei, das sich von der Frontseite weg erstreckt. Es definiert einen Ablaufkanal. Die dabei verwendete immersionsmediumabstoßende Behandlung kann dieselbe sein, wie auf der Frontlinse des Mikroskopobjektivs. Da jedoch auf Objektiveinfassung und Objektivhülle bevorzugt zu keinem Zeitpunkt Immersionsmedium anhaften soll, ist es zu bevorzugen, sie konstant lipo- und hydrophob auszugestalten. Am Ende des Ablaufkanals ist es zweckmäßig, einen Aufnahmebehälter für abgeleitetes Immersionsmedium vorzusehen.

Die umschaltbare Abstoßungseigenschaft kann im Rahmen der Erfindung auch auf einem Probenträger oder einem Deckglas zur Mikroskopie vorgesehen werden. Die Begriffe "Probenträger" und "Deckglas" sind hierbei breit aufzufassen und umfassen insbesondere Membranen oder andere Probenbegrenzungselemente. Soweit nachfolgend vom Probenträger oder Deckglas gesprochen ist, sind solche Elemente mitumfasst. Dies reduziert die Verschmutzung auf der Seite des Präparates und stellt die vollständige Benetzung der Oberfläche sicher, damit es keine Bildartefakte durch Kratzer und Verschmutzung gibt.

Bei einem Mikroskop mit einem Mikroskopobjektiv mit der genannten Umschaltbarkeit ist bevorzugt eine Steuereinrichtung so ausgebildet, dass sie nach Abschluss eines Mikroskopieprozesses das Mikroskopobjektiv von der Immersionsflüssigkeit reinigt, indem sie Objektiv und/oder Probenträger/Deckglas in den die Immersionsflüssigkeit abstoßenden Zustand schaltet.

Diese Umschaltung durch das Steuergerät kann mit Vorteil eingesetzt werden, wenn das Mikroskop sowohl das genannte Mikroskopobjektiv als auch den genannten Probenträger oder Deckglas aufweist. Hier kann für die Auffindung eines zu mikroskopierenden Bereiches die Probe abgescannt werden, wobei in diesem Zustand die Steuereinrichtung den Probenträger oder das Deckglas in den die Beschichtung abstoßenden Zustand schaltet. Bei der dann ausgeführten, scannenden Immersionsmikroskopie ist die Oberfläche des Probenträgers oder des Deckglases, über welche das mit dem Immersionsmedium benetzte Immersionsobjektiv relativverschoben wird, in einen Zustand, der das Immersionsmedium abstößt. Auf diese Weise wirken sehr viel geringere Scherkräfte im Immersionsmedium. Die Oberfläche wird nicht mit Immersionsflüssigkeit verschmiert. Ein einmal aufgebrachter Tropfen bleibt am Objektiv, da er aufgrund der abstoßenden Beschichtung nicht an der Oberfläche des Probenträgers oder Deckglases anhaftet oder dort verschmiert. Hat man in den Scanprozess den abzubildenden Bereich gefunden, schaltet die Steuereinrichtung die Beschichtung auf dem Probenträger/Deckglas in den die Immersionsflüssigkeit nicht abstoßenden Zustand. Auf diese Weise ist eine optimale Benetzung des Probenträgers oder des Deckglases sowie des Mikroskopobjektives mit der Immersionsflüssigkeit sichergestellt, wenn der abzubildende Bereich mikroskopiert wird.

Die abstoßende Behandlung des Probenträgers oder Deckglases erlaubt es, das Immersionsobjektiv so von der Probe zu entfernen, dass möglichst keine Immersionsflüssigkeit am Probenträger/Deckglas verbleibt. Hierbei gibt es verschiedene Möglichkeiten. Zum einen kann man das Objektiv einfach von der Oberfläche des Probenträgers/Deckglases entfernen. Dabei wird der Abstand zwischen Objektiv und behandelter Oberfläche erhöht, bis durch die abstoßenden Eigenschaften der Oberfläche des Probenträgers/Deckglases die Immersionsflüssigkeit möglichst vollständig am Objektiv verbleibt. Alternativ oder ergänzend kann das Objektiv lateral zur Oberfläche verschoben werden, bis es über den Rand des Probenträgers/Deckglases bewegt wurde. Auf diese Weise wird die Immersionsflüssigkeit ebenfalls so manipuliert, dass sie am Objektiv verbleibt und nicht am Probenträger/Deckglas. Dieses Vorgehen hat den Vorteil, dass ein Wechsel zwischen einem Objektiv mit Immersion und einem, beispielsweise als Übersichtsobjektiv ausgebildeten Objektiv ohne Immersion problemlos möglich ist, ohne dass sich das Bild verschlechtert. Dadurch, dass nach dem Entfernen des Immersionsobjektivs keine Immersionsflüssigkeit auf der Oberfläche verbleibt, entstehen auch keine Störungen für das immersionsfreie Objektiv, beispielsweise das Übersichtsobjektiv.

Die vorgesehenen Maßnahmen sind bei einem inversen Mikroskop möglich, gleichermaßen aber auch in der aufrechten Mikroskopie oder für die Lichtblattmikroskopie.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Ele-mente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
Fig. 1 eine Schemadarstellung eines inversen Mikroskops,
Fig. 2 eine Ausschnittsvergrößerung der Darstellung in Fig. 1,
Fig. 3 die Oberseite des Objektivs des Mikroskops der Fig. 1,
Fig. 4 eine Draufsicht auf das Objektiv und
Fig. 5A bis 5D verschiedene Zustände des Mikroskopobjektivs und eines Deckglases während eines Mikroskopieprozesses.

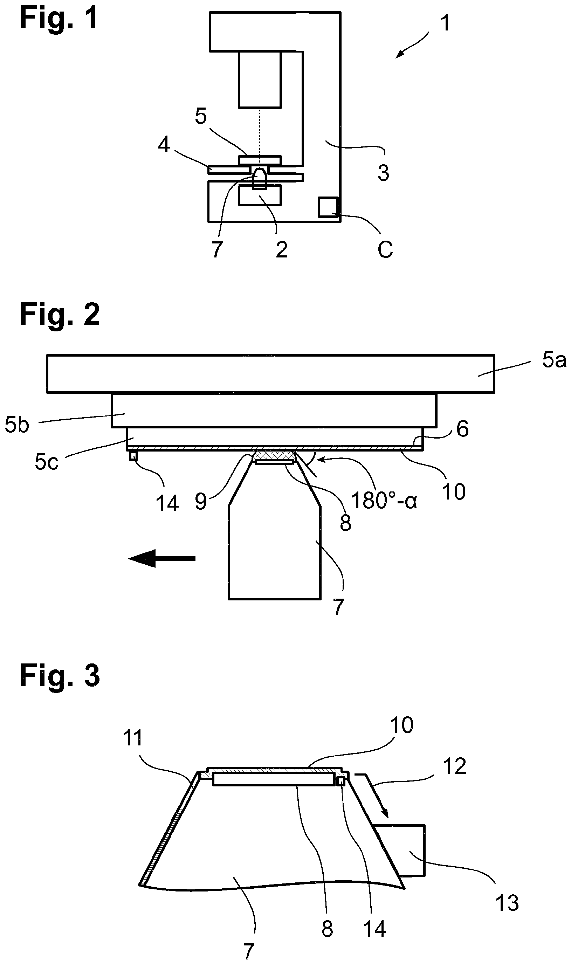

Fig. 1 zeigt schematisch ein inverses Mikroskop 1, das einen Objektivrevolver in einer Basis eines Stativs 3 aufweist. Am Stativ 3 befindet sich weiter ein Probentisch 4, auf dem eine Probe 5 angeordnet ist. Eine Beleuchtungseinrichtung beleuchtet die Probe 5 von oben, ein im Objektivrevolver 2 gehaltenes Objektiv 7 bildet die beleuchtete Probe 5 von deren, dem Objektiv zugewandten Oberfläche 6 (vgl. Fig. 2) ab.

Fig. 2 zeigt vergrößert die Verhältnisse zwischen dem Objektiv 7 und der Probe 5, die aus einem Probenträger 5a, mit aufliegender Probensubstanz 5b und Deckglas 5c besteht.

Das Objektiv 7 umfasst eine Frontlinse 8, auf die eine Immersionsflüssigkeit 9 aufgebracht ist. Die Immersionsflüssigkeit wird je nach Anwendung, d.h. Probe, geeignet gewählt. In einigen Ausbildungsformen ist das Objektiv 7 auf eine bestimmte Immersionsflüssigkeit hin ausgelegt. Die Immersionsflüssigkeit 9 befindet sich in einem Spalt zwischen dem Deckglas 5c und der Frontlinse 8 des Objektivs 7. Alternativ kann das Objektiv 7 die Probe 5b über den Probenträger 5a abbilden. Auf der Oberfläche 6 des Deckglases 5c, welche dem Objektiv 7 zugewandt ist, und die Frontseite des Objektivs 7 ist jeweils eine Beschichtung 10 aufgebracht, die durch eine Umschalteinrichtung 14 zwischen zwei Zuständen umschaltbar ist. In einem ersten Zustand stößt die Beschichtung 10 die Immersionsflüssigkeit 9 ab. Bei einer ölbasierten Immersionsflüssigkeit ist die Beschichtung dann lipophob; bei einer wasserbasierten Immersionsflüssigkeit 9 hydrophob. Bevorzugt ist sie sowohl lipo- als auch hydrophob, also omniphob. Die Umschalteinrichtung 14 wird von der Steuereinrichtung C angesteuert und ist je nach Ausgestaltung der Beschichtung 10 entsprechend ausgebildet. Bei einer Beschichtung 10, die mit elektrischen Mitteln umgeschaltet wird, ist die Umschalteinrichtung 14 eine entsprechende Verdrahtung und Kontaktierung der Beschichtung 10. Bei einer Beschichtung 10, die mit Licht umgeschaltet wird, ist die Umschalteinrichtung 14 eine entsprechende Lichtquelle, welche die Beschichtung 10 geeignet beaufschlagt.

In dem Zustand, der in Fig. 2 gezeigt ist, ist die Beschichtung 10 am Objektiv 7 in den nicht abstoßenden und am Deckglas in den abstoßenden Zustand geschaltet. Dies ist vorgesehen für Phasen des Mikroskopieprozesses, in denen Objektiv 7 und Deckglas 5c relativ zueinander verschoben werden, was in Fig. 2 durch einen Pfeil 11 veranschaulicht ist. In diesem Ausführungsbeispiel wird das Objektiv 7 verschoben. Gleichermaßen ist es möglich, den Probenträger 5a zu bewegen oder beide. Damit die Immersionsflüssigkeit 9 sich nicht während der Verschiebung längs des eingezeichneten Pfeiles am Deckglas 5c verschmiert und so aus dem Spalt zwischen Frontlinse 8 und Deckglas 5c verloren geht, ist die auf der dem Objektiv 7 zugewandte Oberfläche 6 angeordnete Beschichtung 10 für das Immersionsmedium 9 abstoßend geschaltet. Die Beschichtung 10 hat dann die Wirkung, dass die Immersionsflüssigkeit 9 an der Oberfläche 6, auf der die Beschichtung 10 angebracht ist, abgestoßen wird. Fig. 2 verdeutlicht dies durch einen Kontaktwinkel α von über 90° (in der Figur ist der Gegenwinkel 180° - α eingetragen).

Die Frontseite des Objektivs 7, d.h. insbesondere die Frontlinse 8, ist ebenfalls mit der Beschichtung 10 und der Umschalteinrichtung 14 versehen (es kann dieselbe oder eine eigenständige sein). Im Zustand der Fig. 2 ist die Beschichtung 10 auf dem Objektiv 7 in den die Immersionsflüssigkeit 9 nicht abstoßenden Zustand geschaltet. Bei der Relativverschiebung längs des Pfeiles haftet somit die Immersionsflüssigkeit 9 zuverlässig am Mikroskopobjektiv 7 und wird gleichzeitig nicht über das Deckglas 5c verschmiert.

In der dargestellten Ausführungsform erstreckt sich eine weitere Schicht 11 an der Objektivhülle entlang nach unten. Dies ist optional. Sie lässt einen Ablaufkanal 12 frei, an dem die Hülle sowie der Rand der Frontseite des Mikroskopobjektivs 7 nicht beschichtet ist. Aufgrund dieser mangelnden Beschichtung läuft eine aufgebrachte Immersionsflüssigkeit 9, sobald die Beschichtung 10 abstoßend geschaltet wird, durch den Ablaufkanal 12 nach unten ab. Der Ablaufkanal 12 endet in einem Aufnahmebehälter 13, welcher die nicht gewünschte Flüssigkeit aufnimmt.

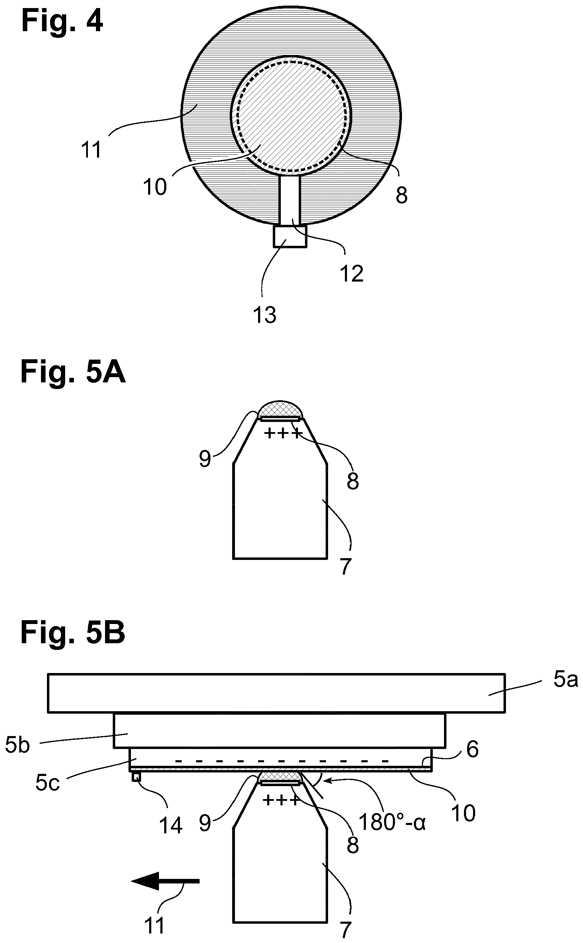

Fig. 4 zeigt in Draufsicht die Frontseite des Objektivs 7. Die Beschichtung 10 überdeckt die nur gestrichelt eingezeichnete Frontlinse 8. Der Rand ist hingegen mit der Schicht 11 versehen. Dadurch ist erreicht, dass eine Immersionsflüssigkeit, welche von der Beschichtung 10 abgestoßen wird, die Fläche mit der Schicht 11 nicht bedecken kann. Der Ablaufkanal 12 ist hingegen gar nicht beschichtet, sodass abgestoßene Immersionsflüssigkeit durch den Ablaufkanal 12 zum Aufnahmebehälter 13 fließen kann.

Die Fig. 5A bis 5D zeigen verschiedene Stadien, die insbesondere bei einem Mikroskopieprozess zum Einsatz kommen können, in dem durch scannende Immersionsmikroskopie zuerst ein abzubildender Bereich (sogenannte region of interest) aufgefunden werden soll und dieser dann eingehend mikroskopiert wird. Fig. 5A zeigt das Mikroskopobjektiv 7 am Beginn des Mikroskopieprozesses. Die Beschichtung 10 ist in den nicht abstoßenden Zustand geschaltet, was durch "+" symbolisiert ist. Der Kontaktwinkel der Immersionsflüssigkeit 9 auf der Frontseite des Mikroskopobjektivs 7 ist kleiner als 90°.

Fig. 5B zeigt den Zustand, in dem der abzubildende Bereich gesucht wird. Objektiv 7 und Probe 5 werden relativ verschoben. Das Objektiv 7 ist in den anziehenden Zustand seiner Beschichtung 10 geschaltet, das Deckglas 5c in den abstoßenden. Dies ist durch "-"-Symbole veranschaulicht. Aufgrund der abstoßenden Eigenschaft der Beschichtung 10 auf der Oberfläche 6 des Deckglases 5c ergibt sich ein Kontaktwinkel von deutlich größer als 90°. In der Figur ist der Ergänzungswinkel (180° - α) eingetragen.

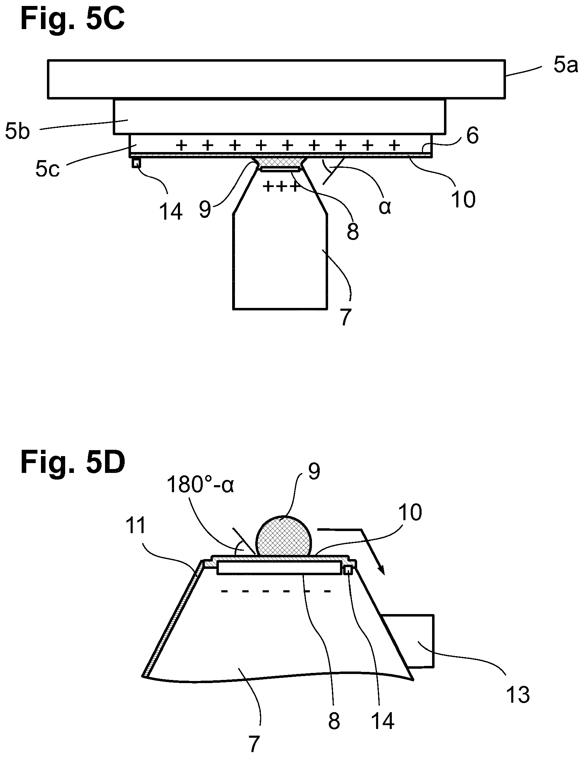

Hat man den interessierenden Bereich gefunden, wird die Beschichtung 10 auf dem Deckglas 5c in den anziehenden Zustand geschaltet. Dies ist in Fig. 5C zu sehen. Es stellt sich dann am Deckglas 5c ein Kontaktwinkel α von deutlich kleiner als 90° an, so dass eine optimale Benetzung des Deckglases 5c sichergestellt ist, wenn der abzubildende Bereich eingehend mikroskopiert wird.

Wurde diese Abbildung abgeschlossen, wird das Deckglas 5c wieder in den abstoßenden Zustand geschaltet und das Objektiv 7 vom Deckglas abgehoben. Aufgrund der nun abstoßenden Eigenschaft der Beschichtung 10 löst sich die Immersionsflüssigkeit 9 vollständig von Deckglas 5c. Es bleibt keine Verschmutzung zurück.

Zum Schluss wird, wie in Fig. 5D zu sehen ist, die Beschichtung am Objektiv 7 in den abstoßenden Zustand geschaltet, wodurch sich ein Kontaktwinkel α von deutlich größer als 90° ergibt. Die Immersionsflüssigkeit 9 kann dann aufgrund der weiteren Schicht 11 nur noch durch den Ablaufkanal längs des in Fig. 5D gezeigten Pfeiles zum Aufnahmebehälter 13 fließen. Gegebenenfalls wird dieser Prozess durch ein Schwenken oder Rotieren des Objektivs 7 durch den Objektivrevolver 2 unterstützt.

In den beschriebenen Ausführungsbeispielen ist sowohl am Objektiv 7 als auch am Probenträger 5a oder dem Deckglas 5c (je nachdem welches Element vor dem Objektiv 7 liegt) die schaltbare Beschichtung 10 vorgesehen. Die Erfindung ist jedoch nicht auf die Kombination eingeschränkt; die schaltbare Beschichtung kann auch nur entweder am Objektiv 7 oder dem Probenträger 5a oder Deckglas 5c verwendet werden.

## Patentansprüche

1. Mikroskopobjektiv zur Abbildung einer Probe mit einem Mikroskop, wobei das Mikroskopobjektiv (7) eine von einer Einfassung (8b) umgebene Frontlinse (8) aufweist und zur Mikroskopie mit einer Immersionsflüssigkeit (9) ausgebildet ist, **dadurch gekennzeichnet, dass** die Frontlinse (8) und/oder deren Einfassung (8b) zwischen einem die Immersionsflüssigkeit (9) abstoßenden und einem die Immersionsflüssigkeit (9) nicht abstoßenden Zustand umschaltbar ist.

2. Mikroskopobjektiv nach Anspruch 1, wobei der umschaltbare Bereich der Frontlinse (8) und/oder deren Einfassung (8b) von einer Umrandung (14) versehen ist, die dauerhaft die Immersionsflüssigkeit abstößt, wobei ein sich von der Frontlinse (8) weg erstreckendes Feld nicht abstoßend ist, das als Ablaufkanal (12) für abgestoßene Immersionsflüssigkeit (9) wirkt.

3. Mikroskopobjektiv nach Anspruch 2, wobei die Umrandung (14) lipo- und hydrophob ist.

4. Mikroskopobjektiv nach Anspruch 2 oder 3, weiter umfassend einen Aufnahmebehälter (13) für abgeleitete Immersionsflüssigkeit (9), in welchen der Ablaufkanal (12) endet.

5. Probenträger oder Deckglas zur Mikroskopie einer auf dem Probenträger (5a) oder unter dem Deckglas (5c) anzuordnenden Probe (5b), wobei auf der zum Objektiv weisenden Oberfläche des Probenträgers (5a) oder des Deckglases (5c) eine Beschichtung aufgebracht ist, die elektrisch oder optisch zwischen einem eine Immersionsflüssigkeit (9) abstoßenden und einem die Immersionsflüssigkeit (9) nicht abstoßenden Zustand umschaltbar ist.

6. Mikroskopobjektiv oder Probenträger oder Deckglas nach einem der obigen Ansprüche, wobei der die Immersionsflüssigkeit (9) nicht abstoßende Zustand ein die Immersionsflüssigkeit (9) anziehender Zustand ist. 10

7. Mikroskop mit einem Mikroskopobjektiv (7) nach einem der obigen Ansprüche, weiter umfassend eine Steuereinrichtung (C), die ausgebildet ist, nach Abschluss eines Mikroskopieprozesses das Mikroskopobjektiv (7) von der Immersionsflüssigkeit (9) zu reinigen, indem sie das Mikroskopobjektiv (7) in den die Immersionsflüssigkeit (9) abstoßenden Zustand schaltet.

8. Kombination aus Mikroskop nach Anspruch 7 und Probenträger oder Deckglas nach Anspruch 5 oder 6, wobei die Steuereinrichtung (C) ausgebildet ist, zum Auffinden eines auf der Probe (5b) abzubildenden Bereichs den Probenträger (5a) oder das Deckglas (5c) in den die Immersionsflüssigkeit (9) abstoßenden Zustand zu schalten, gleichzeitig das Mikroskopobjektiv (7) in den die Immersionsflüssigkeit (9) nicht abstoßenden Zustand zu schalten und das Mikroskopobjektiv (7) und die Probe (5b) relativ zu verschieben, und nach Festlegung des auf der Probe (5b) abzubildenden Bereichs den Probenträger (5a) oder das Deckglas (5c) in den die Immersionsflüssigkeit (9) nicht abstoßenden Zustand zu schalten und den abzubildende Bereichs der Probe (5b) mikroskopisch abzubilden.

9. Verfahren zum Mikroskopieren einer Probe mit einem Mikroskop in einem Mikroskopieprozess, wobei ein Mikroskopobjektiv (7) verwendet wird, das eine von einer Einfassung (8b) umgebene Frontlinse (8) aufweist und zur Mikroskopie mit einer Immersionsflüssigkeit (9) verwendet wird, **dadurch gekennzeichnet, dass** die Frontlinse (8) und/oder deren Einfassung (8b) zwischen einem die Immersionsflüssigkeit (9) abstoßenden und einem die Immersionsflüssigkeit (9) nicht abstoßenden Zustand umschaltbar ist, und nach Abschluss des Mikroskopieprozesses das Mikroskopobjektiv (7) von der Immersionsflüssigkeit (9) gereinigt wird, indem es in den die Immersionsflüssigkeit (9) abstoßenden Zustand geschaltet wird.

10. Verfahren nach Anspruch 9, wobei der Probenträger oder das Deckglas nach Anspruch 5 oder 6 verwendet wird, wobei zum Auffinden eines auf der Probe (5b) abzubildenden Bereichs der Probenträger (5a) oder das Deckglas (5c) in den die Immersionsflüssigkeit (9) abstoßenden Zustand geschaltet wird, gleichzeitig das Mikroskopobjektiv (7) in den die Immersionsflüssigkeit (9) nicht abstoßenden Zustand geschaltet wird und das Mikroskopobjektiv (7) und die Probe (5b) relativverschoben werden, und nach Festlegung des auf der Probe (5b) abzubildenden Bereichs der Probenträger (5a) oder das Deckglas (5c) in den die Immersionsflüssigkeit (9) nicht abstoßenden Zustand geschaltet und der abzubildende Bereichs der Probe mikroskopisch abgebildet wird.

## Claims

1. A microscope objective for imaging a sample using a microscope, wherein the microscope objective (7) comprises a front lens (8) enclosed by a surround (8b) and is embodied for microscopy with an immersion liquid (9), **characterized in that** the front lens (8) and/or the surround (8b) thereof are switchable between a state that repels the immersion liquid (9) and a state that does not repel the immersion liquid (9).

2. The microscope objective as claimed in claim 1, wherein the switchable region of the front lens (8) and/or the surround (8b) thereof is provided with a border (14) that permanently repels the immersion liquid, wherein a field which extends away from the front lens (8) and which acts as a drainage channel (12) for repelled immersion liquid (9) is not repulsive.

3. The microscope objective as claimed in claim 2, wherein the border (14) is lipophobic and hydrophobic.

4. The microscope objective as claimed in claim 2 or 3, further comprising a receptacle (13) for drained immersion liquid (9) in which the drainage channel (12) ends.

5. A sample carrier or cover slip for examining a sample (5b), to be disposed on the sample carrier (5a) or under the cover slip (5c), by microscopy, wherein a coating is applied to the objective facing surface of the sample carrier (5a) or the cover slip (5c), which coating can be electrically or optically switched between a state that repels an immersion liquid (9) and a state that does not repel the immersion liquid (9).

6. A microscope objective or sample carrier or cover slip as claimed in any one of the preceding claims, wherein the state that does not repel the immersion liquid (9) is a state that attracts the immersion liquid (9).

7. A microscope comprising a microscope objective (7) as claimed in any one of the preceding claims, further comprising a control device (C) that is embodied to clean the immersion liquid (9) off the microscope objective (7) following the completion of a microscopy process by virtue of switching the microscope objective (7) into the state that repels the immersion liquid (9).

8. A combination of microscope as claimed in claim 7 and sample carrier or cover slip as claimed in claim 5 or 6, wherein the control device (C) is embodied, for the purposes of locating a region to be imaged on the sample (5b), to switch the sample carrier (5a) or the cover slip (5c) into the state that repels the immersion liquid (9), at the same time switch the microscope objective (7) into the state that does not repel the immersion liquid (9) and displace the microscope objective (7) and the sample (5b) relative to one another, and, after setting the region to be imaged on the sample (5b), to switch the sample carrier (5a) or the cover slip (5c) into the state that does not repel the immersion liquid (9) and to image by microscopy the region of the sample (5b) to be imaged.

9. A method for examining a sample by microscopy using a microscope in a microscopy process, wherein use is made of a microscope objective (7) that comprises a front lens (8) enclosed by a surround (8b) and that is used for microscopy with an immersion liquid (9), **characterized in that** the front lens (8) and/or the surround (8b) thereof is switchable between a state that repels the immersion liquid (9) and a state that does not repel the immersion liquid (9), and, following the completion of the microscopy process, the immersion liquid (9) is cleaned off the microscope objective (7) by virtue of switching the microscope objective (7) into the state that repels the immersion liquid (9).

10. The method as claimed in claim 9, wherein the sample carrier or the cover slip as claimed in claim 5 or 6 is used, wherein, for the purposes of locating a region to be imaged on the sample (5b), the sample carrier (5a) or the cover slip (5c) is switched into the state that repels the immersion liquid (9), at the same time the microscope objective (7) is switched into the state that does not repel the immersion liquid (9) and the microscope objective (7) and the sample (5b) are displaced relative to one another, and, after the region to be imaged on the sample (5b) has been set, the sample carrier (5a) or the cover slip (5c) is switched into the state that does not repel the immersion liquid (9) and the region of the sample to be imaged is imaged by microscopy.

## Revendications

1. Objectif de microscope destiné à reproduire un échantillon avec un microscope, l'objectif de microscope (7) comportant une lentille frontale (8) entourée d'un bord (8b) et étant conçu pour la microscopie avec un liquide d'immersion (9), **caractérisé en ce que** la lentille frontale (8) et/ou son bord (8b) peuvent être commutés entre un état répulsif pour le liquide d'immersion (9) et un état non-répulsif pour le liquide d'immersion (9).

2. Objectif de microscope selon la revendication 1, la zone commutable de la lentille frontale (8) et/ou son bord (8b) étant pourvus d'une bordure (14) qui est en permanence répulsive pour le liquide d'immersion, un champ s'étendant depuis la lentille frontale (8) étant non répulsif et agissant comme un canal d'évacuation (12) pour le liquide d'immersion (9) qui est repoussé.

3. Objectif de microscope selon la revendication 2, la bordure (14) étant lipophobe et hydrophobe.

4. Objectif de microscope selon la revendication 2 ou 3, comprenant en outre un récipient de collecte (13) destiné à un liquide d'immersion (9) qui a été repoussé et dans lequel se termine le canal d'évacuation (12).

5. Lame porte-échantillon ou lamelle destinées à l'observation microscopique d'un échantillon (5b) à disposer sur la lame porte-échantillon (5a) ou la lamelle (5c), un revêtement étant appliqué sur la surface de la lame porte-échantillon (5a) ou la lamelle (5c) qui fait face à l'objectif et qui peut être commutée électriquement ou optiquement entre un état répulsif pour un liquide d'immersion (9) et un état non-répulsif pour le liquide d'immersion (9).

6. Objectif de microscope ou lame porte-échantillon ou lamelle selon l'une des revendications précédentes, l'état non-répulsif pour le liquide d'immersion (9) étant un état qui attire le liquide d'immersion (9).

7. Microscope muni d'objectif de microscope (7) selon l'une des revendications précédentes, ledit microscope comprenant en outre un dispositif de commande (C) qui est conçu pour nettoyer l'objectif de microscope (7) du liquide d'immersion (9), une fois un processus d'observation microscopique terminé, en commutant l'objectif de microscope (7) dans l'état répulsif pour le liquide d'immersion (9).

8. Combinaison d'un microscope selon la revendication 7 et d'une lame porte-échantillon ou d'une lamelle selon la revendication 5 ou 6, le dispositif de commande (C) étant conçu, afin de rechercher une zone à reproduire sur l'échantillon (5b), pour commuter la lame porte-échantillon (5a) ou la lamelle (5c) dans l'état répulsif pour le liquide d'immersion (9), commuter en même temps l'objectif de microscope (7) dans l'état non-répulsif pour le liquide d'immersion (9) et déplacer l'objectif de microscope (7) et l'échantillon (5b) l'un par rapport à l'autre et, après avoir défini la zone à reproduire sur l'échantillon (5b), commuter la lame porte-échantillon (5a) ou la lamelle (5c) dans l'état non-répulsif pour le liquide d'immersion (9) et reproduire par microscopie la zone à reproduire de l'échantillon (5b).

9. Procédé d'observation microscopique d'un échantillon avec un microscope dans un processus d'observation microscopique, un objectif de microscope (7) étant utilisé qui comporte une lentille frontale (8) entourée d'un bord (8b) et qui est utilisée pour l'observation microscopique avec un liquide d'immersion (9), **caractérisé en ce que** la lentille frontale (8) et/ou son bord (8b) peuvent être commutés entre un état répulsif pour le liquide d'immersion (9) et un état non-répulsif pour le liquide d'immersion (9) et, une fois le processus d'observation microscopique terminé, l'objectif de microscope (7) est nettoyé du liquide d'immersion (9) par commutation dans l'état répulsif pour le liquide d'immersion (9).

10. Procédé selon la revendication 9, la lame porte-échantillon ou la lamelle selon la revendication 5 ou 6 étant utilisée, afin de rechercher une zone à reproduire sur l'échantillon (5b), la lame porte-échantillon (5a) ou la lamelle (5c) étant commutée dans l'état répulsif pour le liquide d'immersion (9), et en même temps l'objectif de microscope (7) étant commuté dans l'état non-répulsif pour le liquide d'immersion (9) et l'objectif de microscope (7) et l'échantillon (5b) étant déplacés l'un par rapport à l'autre et, après avoir défini la zone à reproduire sur l'échantillon (5b), la lame porte-échantillon (5a) ou la lamelle (5c) étant commutée dans l'état non-répulsif pour le liquide d'immersion (9) et la zone à reproduire de l'échantillon étant reproduite par microscopie.
